# EUROPÄISCHE PATENTSCHRIFT

(11) **EP 2 223 029 B1**
(45) Veröffentlichungstag und Bekanntmachung des Hinweises auf die Patenterteilung: **11.07.2018**
(21) Anmeldenummer: 08865161.7
(22) Anmeldetag: 16.12.2008
(51) Int. Cl.: F25D 23/02, F25D 23/12

(54) **AUSGABEEINHEIT EINES KÄLTEGERÄTES, KÄLTEGERÄT UND VERFAHREN ZUR MONTAGE EINER AUSGABEEINHEIT**
OUTPUT UNIT OF A REFRIGERATION DEVICE, REFRIGERATION DEVICE AND METHOD FOR INSTALLING A REFRIGERATION DEVICE.
UNITÉ DISTRIBUTRICE D'UN APPAREIL FRIGORIFIQUE, APPAREIL FRIGORIFIQUE ET PROCÉDÉ DE MONTAGE D'UNE UNITÉ DISTRIBUTRICE

(30) Priorität: 21.12.2007 DE 102007062001
(43) Veröffentlichungstag der Anmeldung: 01.09.2010
(73) Patentinhaber: BSH Hausgeräte GmbH, 81739 München (DE); Miele & Cie. KG, 33332 Gütersloh (DE)
(72) Erfinder: LAIBLE, Karl-Friedrich, 89129 Langenau (DE); MATZNER, Arno, 36124 Eichenzell (DE); ECKARTSBERG, Peter, 73433 Aalen (DE); VAN PELS, Ulrich, 33378 Rheda-Wiedenbrück (DE); PLACKE, Frank, 33647 Bielefeld (DE); STAHL, Matthias, 33813 Oerlinghausen (DE)
(86) Internationale Anmeldenummer: PCT/EP2008/067673
(87) Internationale Veröffentlichungsnummer: WO 2009/080635

(56) Entgegenhaltungen:
- EP-A- 1 605 219
- WO-A1-2008/082252
- KR-A- 20050 077 581
- US-A- 2 274 409
- US-A- 5 442 933

## Beschreibung

Die vorliegende Erfindung betrifft eine Ausgabeeinheit eines Kältegerätes, aufweisend eine Nische mit einer Rückwand, die mit einer Abdeckung versehen ist, die einen nach innen in die Nische gewölbten schalenförmigen Abschnitt aufweist, der von gegenüberliegenden Randabschnitten begrenzt wird, die mit einem Nischenrahmen verbunden sind.

Eine Ausgabeeinheit eines Kältegerätes ist in DE 10 2004 013 432 A1 beschrieben. Dort wird eine Kühlschranktür mit einem Spender offenbart. Diese Kühlschranktür verfügt über einen Außenmantel, der ihr äußeres Aussehen bestimmt. An den beiden Seitenenden der Kühlschranktür sind ein erster und ein zweiter Montagerahmen montiert, die über einen ersten und einen zweiten Montageschlitz verfügen, die einander gegenüberstehend in der Längsrichtung in ihnen ausgebildet sind. Der Spender ist lösbar mit der Vorderseite des Außenmantels verbunden und er verfügt über ein Gehäuse, welches das äußere Aussehen des Spenders bestimmt und mit einem Aussparungsabschnitt versehen ist. Mit der Vorderseite des Außenmantels ist mit Ausnahme eines Gebiets, in dem der Spender installiert ist, ein Außenplattenabschnitt verbunden, um das äußere Aussehen der Kühlschranktür zu bestimmen.

Die beiden Seitenendabschnitte der Außenplatte sind in den ersten und den zweiten Montageschlitz des ersten und des zweiten Montagerahmens eingeführt. Wenn es erforderlich ist, die Außenplatten oder den Spender auszutauschen, kann der Benutzer einfach die Außenplatten oder den Spender austauschen, ohne die Kühlschranktür austauschen zu müssen. Demgemäß kann die Farbe des Gehäuses des Spenders variabel ausgewählt werden. D.h., dass die Farbe des Gehäuses identisch mit derjenigen der Außenplatten ausgewählt werden kann oder dass die Farbe des Gehäuses verschieden von der der Außenplatten ausgewählt werden kann, wie es vom Benutzer gewünscht wird. Allerdings ist es dabei erforderlich, die Tür zweiteilig auszubilden, d.h. es ist eine obere Außenplatte und eine getrennte untere Außenplatte erforderlich. Zudem ist das Gehäuse des Spenders, das die Abdeckung bildet, in Montageschlitzen eines Montagerahmens befestigt. Dies bedeutet, dass zum einen der Montagerahmen auch nach Abschluss der Montage weiterhin in Erscheinung tritt, und die optische Linie des Kältegerätes stört, zum anderen bedeutet dies, dass zur Montage oder Demontage der Abdeckung der Montagerahmen entfernt werden muss. Dazu müssen zunächst seitliche Schrauben am Montagerahmen gelöst werden.

Die EP 1 605 219 A1 beschreibt eine Ausgabeeinheit eines Kältegerätes mit einer einteiligen Ausbildung von Nische und Blende, welche keine getrennte Abdeckung aufweist. Die Nische wird mittels Befestigungsmittel von außen blendenartig auf die Ausgabeeinheit aufgesetzt. Aufgrund der aufwendigen Gestaltung der nischenförmigen Blende ist eine Herstellung der Blende in hochwertigen Materialen, wie bspw. Edelstahl nicht wirtschaftliche sinnvoll. Für eine optische Verdeckung der Befestigungsmittel ist es erforderlich, die Befestigungsmittel zu verdecken. Dazu sind den Befestigungsmitteln die Betätigungslaschen von Wasserspender und Eisausgabe vorgelagert. Ein Montage oder Demontage von Nische und Blende ist folglich nur bei umfangreicher Zerlegung von Funktionsbauteilen der Ausgabeeinheit möglich.

Das Dokument WO 2008/082252 A1 offenbart den Oberbegriff des Anspruchs 1. Aufgabe der Erfindung ist es, eine Abdeckung für die Rückwand einer Nische einer Ausgabeeinheit eines Kältegerätes zu schaffen, die in einfacher Weise montiert bzw. demontiert werden kann und nach einer Montage in optisch ansprechender Weise befestigt ist. Insbesondere soll für eine optisch ansprechende Befestigung sichergestellt sein, dass möglichst schmale bzw. gleichmäßige Spalte zwischen Abdeckung und Montageort gewährleistet sind und ergänzend keine Befestigungsmittel für den Benutzer sichtbar sind.

Die Aufgabe wird durch eine Ausgabeeinheit eines Kältegerätes mit den Merkmalen des Anspruchs 1 gelöst.

Dadurch, dass die Randabschnitte der Abdeckung an frontseitigen Auflageflächen des Nischenrahmens anliegend in einer Montageendposition gehalten sind, und indem der schalenförmige Abschnitt durch ein Befestigungsmittel gegen die Rückwand der Nische herangezogen ist, wird eine Elastizität der Abdeckung genutzt, um die Randabschnitte spaltreduziert bzw. spaltfrei an die Auflageflächen aufzuspannen. Im aufgespannten Zustand liegen die Randabschnitte der Abdeckung unter Vorspannung an den Auflageflächen an. Durch die Ausnutzung der elastischen Eigenschaften der Abdeckung in Kombination mit der aufgebrachten Vorspannkraft können Fertigungstoleranzen der Bauteile, insbesondere der Abdeckung selbst, und Lageunterschiede zwischen Ausgabeeinheit und Nischenrahmen ausgeglichen werden.

Die Ausgabeeinheit kann insbesondere für einen Wasser- und Eisspender eines Kältegerätes verwendet werden. Aus Installationsgründen soll dabei die Abdeckung der Ausgabeeinheit entfernbar ausgebildet sein. Erfindungsgemäß kann die Abdeckung alle wichtigen Toleranzen des Zusammenbaus ausgleichen, so dass die Abdeckung sauber an seinem Befestigungsrand aufliegt. Der Befestigungsrand kann sich an einer Aussparung eines Gehäuses des Kältegerätes, an einem separaten Montagerahmen oder an einem Ausschnitt einer Möbeltür befinden. Eine zusätzliche Anforderung ist es, dass die gewählten Befestigungsmittel, mit denen die Abdeckung an der Ausgabeeinheit befestigt ist, vor dem Benutzer optisch verborgen angeordnet sind. Insbesondere wird durch die Erfindung gewährleistet, dass die Randabschnitte der Abdeckung stets spaltfrei auf den jeweiligen Anlageflächen aufliegen. Dies wird dadurch erreicht, dass die elastischen Eigenschaften der Abdeckung genutzt werden, um in der Abdeckung Verformungsspannungen aufzubauen, welche Spannungskräfte erzeugen, die die Randabschnitte der Abdeckung gegen die Auflageflächen drücken.

Aufgrund der zu erwartenden Fertigungstoleranzen für die Abdeckung kann eine spaltfreie Montage erreicht werden, indem die Abdeckung unabhängig ihrer konkreten toleranzbedingten Baugröße stets soweit nach hinten in die Nische, also in Richtung der Rückwand gedrückt werden kann, so dass die Randabschnitte stets an den Auflageflächen zur Anlage kommen und kein offen stehender Spalt verbleibt. Da die Abdeckung schalenförmig gewölbt ausgebildet ist, kann die Wölbung in gewissem Maße verformt werden, so dass Fertigungstoleranzen der Abdeckung durch die Formänderungen der Wölbung ausgeglichen werden. Eine Wölbung der Abdeckung bspw. in Form eines Kreisbogenabschnitt würde sich dabei zu einer elliptischen Bogenform ändern. Auch wenn die Abdeckung idealer Weise eine Bogenform aufweist, so kann die erfindungsgemäße Verformung auch bei eher kastenartigen Grundformen der Nische bzw. der Abdeckung realisiert werden.

Die Abdeckung kann abnehmbar ausgebildet und mittels lösbarer Befestigungsmittel in der Montageendposition gehalten sein. Indem die Abdeckung abnehmbar gehalten ist, kann die Ausgabeeinheit an unterschiedliche Möbeltüren angepasst werden. So kann für unterschiedlich dicke Möbeltüren die Abdeckung stets passgenau eingebaut werden. In Abstimmung mit der optischen Ausbildung der Möbeltür können auch unterschiedliche Abdeckungen verwendet werden. Bei einem Wechsel der Ausgabeeinheit bzw. des Kältegerätes an eine andere Möbeltür kann eine bisherige Abdeckung durch eine optisch anders ausgebildete ersetzt werden.

Die Abdeckung kann durch Befestigungsmittel in einem Abstand von der Rückwand der Nische gehalten sein, die in einem mittleren Bereich des schalenförmigen Abschnitts der Abdeckung angeordnet sind. Indem die Abdeckung nicht direkt anliegend an die Rückwand befestigt wird, ist ein Spielraum vorhanden, um die Abdeckung in erforderlichem Maße vorspannen zu können. Da die größte elastische Beweglichkeit der Abdeckung in einem mittleren Abschnitt zu erwarten ist, sollte das Befestigungsmittel dort platziert sein, so dass die maximal mögliche elastische Verformung der Abdeckung genutzt werden kann.

Dabei kann ein dem mittleren Bereich des schalenförmigen Abschnitts der Abdeckung zugeordneter Wandabschnitt der Rückwand der Nische tiefenverstellbar ausgebildet sein. Die Tiefenverstellbarkeit der Rückwand ermöglicht es, dass auch bei unterschiedlicher Position des Kältegerätes bezüglich der Möbeltür der Abstand zwischen Rückwand der Ausgabeeinheit und Abdeckung mit ausreichendem Spielraum positioniert werden kann. Rückt bspw. bei einer sehr dünnen Möbeltür die Rückwand der Nische so weit nach vorne, dass die Abdeckung an der Rückwand ansteht, kann keine Spannung in der Abdeckung aufgebaut werden. Durch die Tiefenverstellung kann die Nische der Ausgabeeinheit bezüglich des Kältegerätes weiter zurückgesetzt werden, wodurch erneut ein Spielraum für das Spannen der Abdeckung geschaffen wird.

Dazu kann die Rückwand der Nische zur Tiefenverstellung über verstellbare Justierkeile an einem Grundkörper der Ausgabeeinheit festgelegt sein. Es können vorzugsweise zwei aufeinander zu und voneinander weg bewegbare Justierkeile vorgesehen sein, deren Anschrägungen mit korrespondierenden Schrägflächen an dem Grundkörper oder der Nische der Ausgabeeinheit zusammenwirken. Um ein unbeabsichtigtes Verrutschen der Justierkeile zu verhindern können die schrägen Kontaktflächen zahnförmig profiliert sein, so dass ein formschlüssiger Eingriff realisiert ist, der ein Verrutschen der Justierkeile verhindert. Neben den Justierkeilen bieten sich zum Zwecke der Tiefenverstellung auch Schraubenkonstruktionen an.

Das lösbare Befestigungsmittel kann beispielsweise eine Schraube aufweisen, die zum Heranziehen eines oberen Bereichs der Abdeckung gegen die Rückwand der Nische, vorzugsweise optisch verdeckt angeordnet ist. Der obere Bereich der Abdeckung ist im allgemeinen ein für den Benutzer unsichtbarere Bereich, der aufgrund seiner rückgezogenen Position in der Nische von der Deckenwand der Nische optisch verdeckt wird. Die Schraube kann insbesondere an einer Stelle vorgesehen sein, die durch eine Ausgabeschütte des Eisbereiters oder einer Zapfstelle des Wasserspenders optisch verdeckt ist.

In einer weiteren Ausgestaltung kann das lösbare Befestigungsmittel ein Druckstück aufweisen, das ausgebildet ist, die Abdeckung von seiner konkaven Seite aus in Richtung der Rückwand der Nische zu drücken, um einen unteren Bereich der Abdeckung gegen die Rückwand der Nische heranzuziehen. Dies hat den Vorteil, dass keine Schrauben erforderlich sind, um die Abdeckung gegen die Rückwand der Nische zu ziehen. Die Befestigungskräfte werden durch das Druckstück auf die Abdeckung übertragen, die sich dadurch gegen die Rückwand der Nische spannt.

In dieser Ausgestaltung kann zum Drücken des Druckstücks gegen die Abdeckung eine am Druckstück anstehende Tropfschale in der Ausgabeeinheit tiefenverstellbar gelagert sein. Die Abdeckung wird in einem unteren Bereich indirekt, also mittelbar, durch die Tropfschale gegen die Rückwand der Nische nach hinten gedrückt. Insofern wird eine jedenfalls erforderliche Tropfschale als Befestigungsmittel benutzt, so dass optisch diese Funktionalität nicht auffällt und keine gesonderten Befestigungsmittel wahrgenomme werden, was den optischen Eindruck des Gerätes insgesamt verbessert.

Die Tropfschale selbst kann durch ein Verstellmittel nach hinten gedrückt werden. Das Verstellmittel kann insbesondere von einer Frontseite der Ausgabeeinheit zugänglich sein. Die Tropfschale ist in der Tiefe beweglich gelagert. So kann durch eine Verschieben der Tropfschale nach hinten der untere Bereich der Abdeckung gegen die Rückwand gedrückt werden. Um die Tropfschale in der neuen Position fixieren zu können, ist ein Spannkeil vorgesehen, der durch ein Sicherungselement festgelegt sein kann.

Dazu kann die tiefenverstellbare Tropfschale durch Betätigen eines verschiebbar gelagerten Spannkeils, zum Drücken des Druckstücks gegen die Abdeckung, zu bewegen sein. Der Spannkeil kann durch ein Sicherungselement festgelegt sein, so dass sich der Spannkeil in seiner vorgesehenen Position fixieren lässt, um ein unerwünschtes Verstellen zu verhindern. Als Sicherungsmittel können bspw. Schrauben vorgesehen sein.

In allen erfindungsgemäßen Ausgestaltungen kann die Abdeckung aus einem metallischen Bandmaterial, insbesondere aus einem Edelstahlblech hergestellt sein. Eine Ausbildung der Abdeckung in Edelstahl bewirkt ein besonders hochwertiges Erscheinungsbild, weshalb die Herstellung der Abdeckung aus einem Edelstahlblech wünschenswert ist. Allerdings ist es aus fertigungstechnischen Gründen schwierig, gebogene, also schalenartig gewölbte Edelstahlbleche in ausreichend enger Toleranz herzustellen, um eine gute optische Wirkung mit möglichst engen und gleichmäßigen Spalten gewährleisten zu können. Dies hängt bspw. mit den federelastischen Eigenschaften der Edelstahlbleche zusammen. Ähnliche Schwierigkeiten in engen Toleranzen herstellen zu können, sind jedoch auch bei anderen, sich gleichartig verhaltenden Materialen zu erwarten. Am Beispiel einer Abdeckung aus Edelstahl wird durch die Erfindung vorgeschlagen, nicht das Edelstahlblech ausreichend genau zu fertigen, sondern die elastischen Eigenschaften des Bleches zu nutzen, um eine Vorspannung der Abdeckung aufzubringen, welche eine spaltfreie Montage sicherstellt. Erfindungsgemäß kann auf eine genaue, eng tolerierte Fertigung der Abdeckung verzichtet werden, wodurch die Herstellkosten gering sind. Gleichzeitig werden aber durch die elastisch verspannte Befestigung der Abdeckung die Montagespalte auf ein geringsmögliches Maß reduziert, was das optische Erscheinungsbild der Ausgabeeinheit und des gesamten Kältegerätes verbessert.

Die Erfindung bezieht sich insbesondere auch auf Kältegeräte, welche einen Wasserspender bzw. Eisbereiter mit einer erfindungsgemäßen Ausgabeeinheit aufweisen. Die Erfindung bezieht sich auch auf eine Verfahren zur Montage einer Ausgabeeinheit eines Kältegerätes an einer Tür, insbesondere einer Möbeltür.

Das erfindungemäße Verfahren zur Montage einer Ausgabeeinheit eines Kältegerätes an einer Tür kann die folgenden Schritte aufweisen:
- Einsetzen einer schalenförmigen, insbesondere aus Edelstahlblech hergestellten Abdeckung durch eine Öffnung in der Tür, bis ein gewölbter Abschnitt der Abdeckung vor einer Rückwand einer Nische der Ausgabeeinheit positioniert ist,
- Heranziehen eines oberen Bereichs der Abdeckung gegen die Rückwand der Nische durch Anziehen eines lösbaren Befestigungsmittels,
- Einsetzen einer Tropfschale in die Ausgabeeinheit,
- Spannen eines Spannkeils zur Tiefenverstellung der Tropfschale, um einen unteren Bereich der Abdeckung mittels eines von der Tropfschale betätigten Druckstücks gegen die Rückwand der Nische zu drücken.

Das Einsetzen der Tropfschale in die Ausgabeeinheit kann alternativ auch vor dem Heranziehen des oberen Bereichs der Abdeckung gegen die Rückwand der Nische durch Anziehen eines lösbaren Befestigungsmittels erfolgen.

Bevor mit dem Einsetzen der schalenförmigen Abdeckung begonnen wird, kann optional, im Bedarfsfall, ein Tiefenjustieren der Ausgabeeinheit bezüglich der Tür durch Verstellen von Justierkeilen, die zwischen Ausgabeeinheit und Kältegerät angeordnet sind, stattfinden.

Eine Ausführungsform der Erfindung ist an Hand einer in den Figuren beispielhaft dargestellten Ausgabeeinheit eines Kältegerätes für Haushaltszwecke beschrieben. Aus der detaillierten Beschreibung dieses konkreten Ausführungsbeispiels ergeben sich auch weitere generelle Merkmale und Vorteile der vorliegenden Erfindung.

Es zeigen:
- Figur 1: eine perspektivische Ansicht einer Ausgabeeinheit eines Kältegerät für Haushaltszwecke in einer Möbeltür;
- Figur 2: eine Schnittansicht entlang der Schnittlinie A-A nach Fig.1;
- Figur 3: eine Schnittansicht entlang der Schnittlinie B-B nach Fig.1;
- Figur 4: eine perspektivische Draufsicht auf eine erfindungsgemäße Tropfschale mit Druckstückaufnahme;
- Figur 5: eine perspektivische Ansicht von unten auf die Tropfschale nach Fig. 4;
- Figur 6: eine perspektivische Ansicht von unten auf ein Gehäuse der Ausgabeeinheit mit einer Halterung für einen Spannkeil;
- Figur 7: eine perspektivische Ansicht von unten auf das Gehäuse der Ausgabeeinheit nach Fig. 6 mit in die Halterung eingesetztem Spannkeil;
- Figur 8: eine perspektivische Vorderansicht des Spannkeils nach Fig. 7;
- Figur 9: eine perspektivische Rückansicht des Spannkeils nach Fig. 7;
- Figur 10: eine perspektivische Ansicht von unten auf die Ausgabeeinheit mit Nische und in die Halterung eingesetztem Spannkeil;

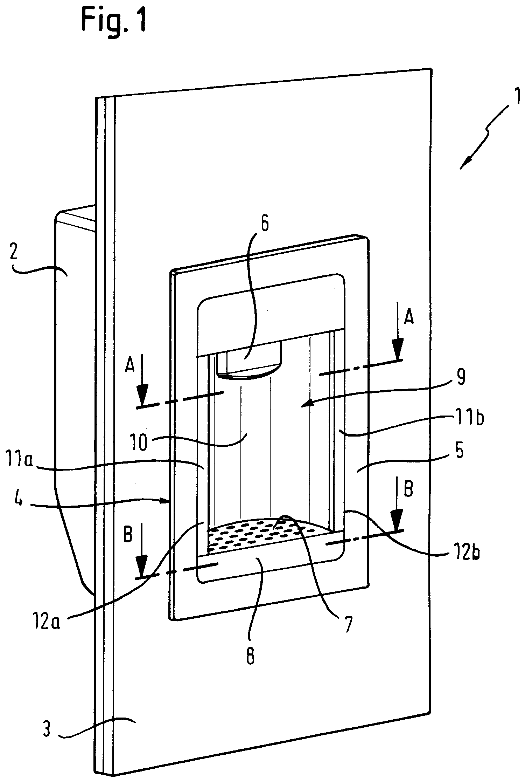

Eine Ausgabeeinheit 1 gemäß Fig. 1 weist einen Wasserspender und/oder Eisbereiter 2 auf, der an einer Rückseite einer Möbeltür 3 angeordnet ist. Die Möbeltür 3 weist eine Öffnung für eine Nische 4 der Ausgabeeinheit 1 auf. Die Nische 4 ist von einem Nischenrahmen 5 umrandet. An einem oberen Ende der Nische 4 ist eine Ausgabeschütte 6 für entweder Eis oder Wasser angeordnet. An einem unteren Ende der Nische 4 befindet sich ein Tropfsieb 7, welches eine Tropfschale 8 abdeckt. Zwischen Ausgabeschütte 6 und Tropfschale 8 erstreckt sich eine Abdeckung 9 in der Nische. Die Abdeckung 9 weist einen schalenförmigen Abschnitt 10 und zwei gegenüberliegende Randabschnitte 11a und 11b auf. Der Randabschnitt 11a, in Fig.1 links dargestellt, liegt auf einer ersten frontseitigen Auflagefläche 12a des Nischenrahmens 5 auf. Der Randabschnitt 11b, in Fig.1 rechts dargestellt, liegt auf einer zweiten frontseitigen Auflagefläche 12b des Nischenrahmens 5 auf.

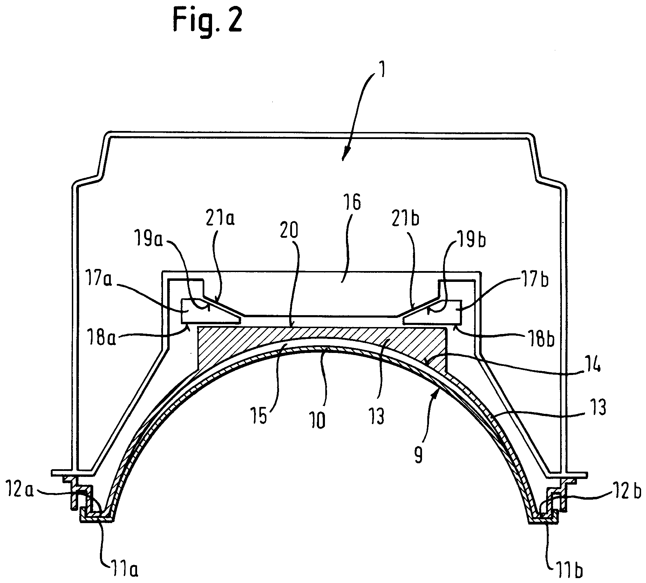

Fig. 2 zeigt eine Schnittansicht durch die Ausgabeeinheit 1 entlang der Schnittlinie A-A nach Fig.1 etwa in Höhe der Ausgabeschütte 6. Die Abdeckung 9 ist einer Rückwand 13 der Ausgabeeinheit 1 vorgelagert. Die Rückwand 13 weist einen mittleren bogenförmigen Abschnitt 14 auf, der von den zwei gegenüberliegenden frontseitigen Auflageflächen 12a und 12b begrenzt wird. Die gegenüberliegenden frontseitigen Auflageflächen 12a und 12b bilden einen Teil des Nischenrahmens 5 der Rückwand 13. In der dargestellten Montageposition liegen die Randabschnitt 11a und 11b unmittelbar spaltfrei an den frontseitigen Auflageflächen 12a und 12b an. Der schalenförmigen Abschnitt 10 der Abdeckung 9 liegt jedoch nicht unmittelbar an dem mittleren bogenförmigen Abschnitt 14 der Rückwand 13 an, sondern es ist auch in der richtigen Montageposition ein verbleibender Ausgleichsraum 15 vorhanden. Die Lage der Rückwand 13 kann gegenüber einem Grundkörper 16 der Ausgabeeinheit 1 tiefenverstellt werden. Dazu sind zwischen der Rückwand 13 und dem Grundkörper 16 zwei Justierkeile 17a und 17b eingefügt. Beide Justierkeile 17a, 17b weisen jeweils eine ebene Kontaktfläche 18a, 18b und eine schräge Kontaktfläche 19a, 19b auf. Die ebenen Kontaktflächen 18a, 18b korrespondieren mit einer ebenen Rückseite 20 der Rückwand 13. Die beiden schrägen Kontaktflächen 19a, 19b korrespondieren mit Schrägflächen 21a und 21b des Grundkörpers 16. Durch ein Gegeneinanderschieben der beiden Justierkeile 17a und 17b wird die Rückwand 13 weiter nach vorne in Richtung der Nischenöffnung verstellt. Durch ein Auseinanderziehen der beiden Justierkeile 17a und 17b wird die Rückwand 13 zurückgesetzt. Durch die Justierkeile 17a und 17b kann stets ein ausreichend großer Ausgleichsraum 15 eingestellt werden.

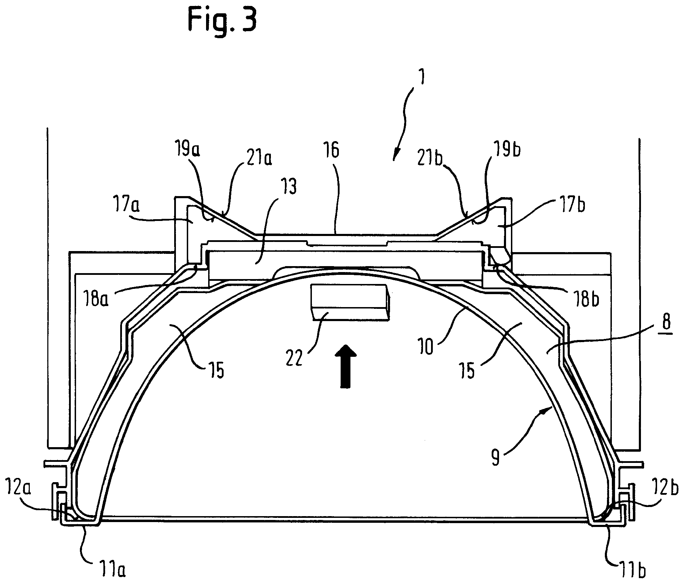

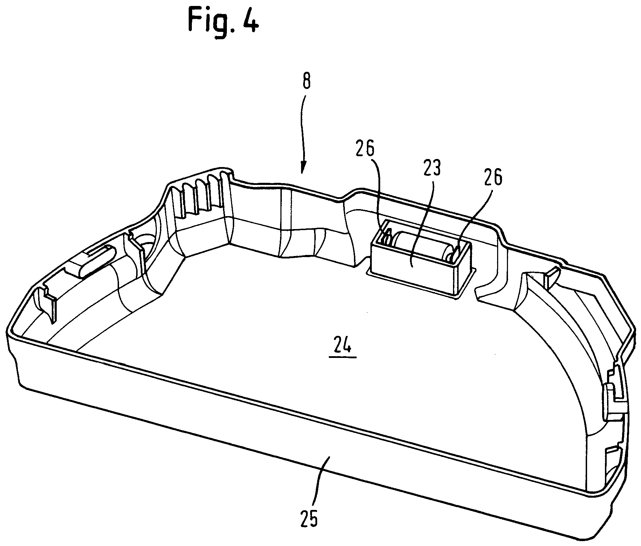

Fig. 3 zeigt eine Schnittansicht durch die Ausgabeeinheit 1 entlang der Schnittlinie B-B nach Fig.1 etwa in Höhe der Tropfschale 8. Oberhalb der Tropfschale 8 ist im Schnitt die Abdeckung 9 gezeigt. Der mittlere schalenförmige Abschnitt 10 der Abdeckung 9 wird mittels eines Druckstücks 22 gegen die Rückwand 13 gedrückt. Das Druckstück 22 ist in eine Druckstückaufnahme 23 (Fig. 4) eingesetzt. Durch eine Bewegung der Tropfschale 8 in Pfeilrichtung wird das Druckstück 22 gegen die konkave Seite des mittleren schalenförmigen Abschnitts 10 der Abdeckung 9 gedrückt. Das Druckstück 22 spannt den mittleren schalenförmigen Abschnitt 10 der Abdeckung 9 gegen die Rückwand 13 der Nische 4. Dadurch werden die unteren Bereiche der Randabschnitt 11a und 11b der Abdeckung 9 gegen die frontseitigen Auflageflächen 12a und 12b des Nischenrahmens 5 gezogen. Die Lage der Rückwand 13 kann auch in diesem unteren Bereich gegenüber dem Grundkörper 16 der Ausgabeeinheit 1 tiefenverstellt werden. Dazu sind zwischen der Rückwand 13 und dem Grundkörper 16 ebenfalls zwei Justierkeile 17a und 17b eingefügt. Beide Justierkeile 17a, 17b weisen jeweils eine ebene Kontaktfläche 18a, 18b und eine schräge Kontaktfläche 19a, 19b auf. Die ebenen Kontaktflächen 18a, 18b korrespondieren mit einer ebenen Rückseite 20 der Rückwand 13. Die beiden schrägen Kontaktflächen 19a, 19b korrespondieren mit Schrägflächen 21a und 21b des Grundkörpers 16. Durch ein Gegeneinanderschieben der beiden Justierkeile 17a und 17b wird die Rückwand 13 weiter nach vorne in Richtung der Nischenöffnung verstellt. Durch ein Auseinanderziehen der beiden Justierkeile 17a und 17b wird die Rückwand 13 zurückgesetzt. Durch die Justierkeile 17a und 17b kann auch hier stets ein ausreichend großer Ausgleichsraum 15 eingestellt werden.

Fig. 4 zeigt eine perspektivische Draufsicht auf die Tropfschale 8. Die Tropfschale 8 ist wannenförmig gestaltet mit einer Bodenfläche 24 und einer umlaufenden Wand 25. An einem hinteren Ende der Tropfschale 8 ist die Druckstückaufnahme 23 in die Bodenfläche 24 integriert. Die Druckstückaufnahme 23 weist federelastische Rastzungen 26 auf, welche das Druckstücke 22 (Fig. 3) lösbar halten.

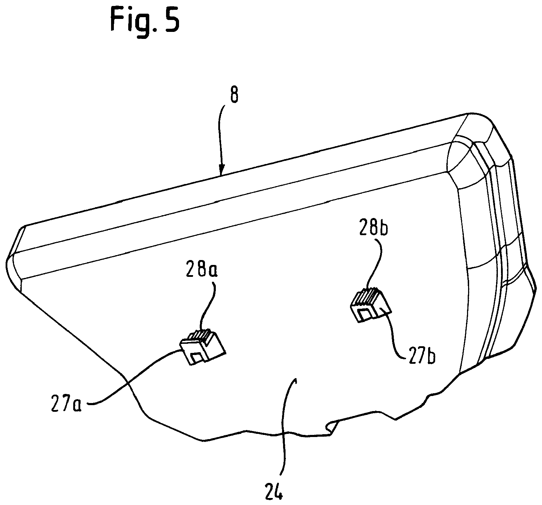

In Fig. 5 ist die Tropfschale 8 in einer perspektivische Ansicht von unten gezeigt. An der Unterseite der Bodenfläche 24 sind zwei Stützdome 27a und 27b vorgesehen. Die Stützdome 27a und 27b können an die Bodenfläche 24 der Tropfschale 8 angeformt sein. Die Stützdome 27a und 27b ragen senkrecht aus der Ebene der Bodenfläche 24 heraus und weisen seitlich angeordnete Rippenflächen 28a und 28b auf.

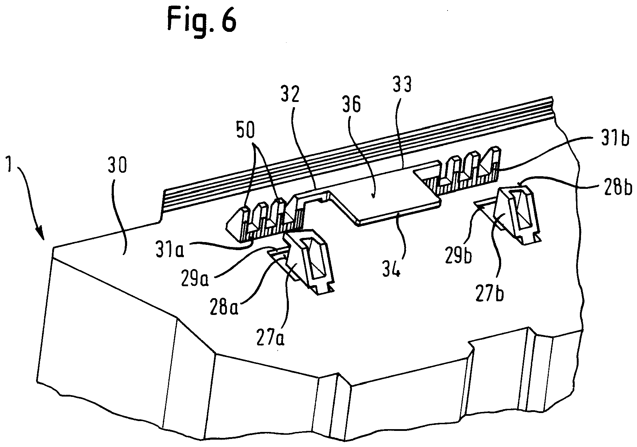

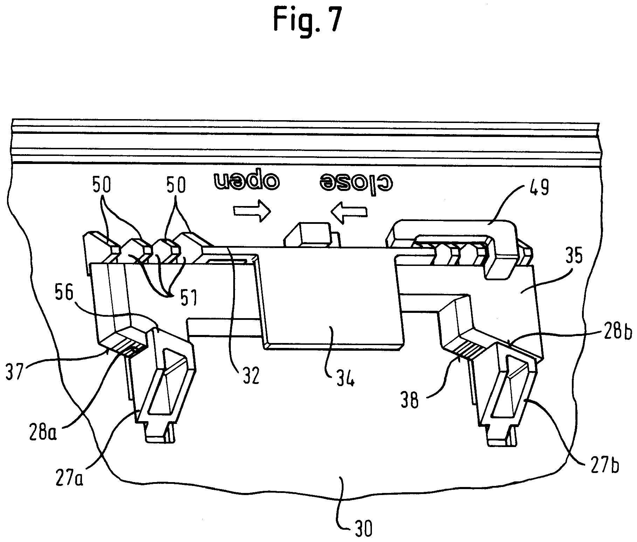

Wie in Fig. 6 gezeigt ragen die Stützdome 27a und 27b der Tropfschale 8 in der in die Ausgabeeinheit 1 eingesetzten Lage der Tropfschale 8 durch Öffnungen 29a und 29b in dem Boden 30 der Ausgabeeinheit 1 nach unten heraus. Den Rippenflächen 28a und 28b gegenüberliegend sind korrespondierende Rippenbereiche 31a und 31b an einer Stützwand 32 am Boden 30 der Ausgabeeinheit 1 angeordnet. Die Stützwand 32 ist an den Boden 30 der Ausgabeeinheit 1 angeformt. In einem Bereich zwischen den beiden Stützdomen 27a und 27b erstreckt sich ausgehend von einem frei auskragendem Ende 33 der Stützwand 32 eine Führungslasche 34 für einen Spannkeil 35 (Fig. 7 bis 9). Die Führungslasche 34 weist eine ebene Sperrfläche 36 auf, welche sich in einer zum Boden 30 parallelen Ebene erstreckt.

Fig. 7 zeigt den Spannkeil 35 von unten auf das Gehäuse der Ausgabeeinheit in die Halterung nach Fig. 6. Der Spannkeil 35 ist mittels der Führungslasche 34 und einem Führungsvorsprung 56 des Stützdomes 27a an dem Boden 30 der Ausgabeeinheit 1 gehalten. Der Spannkeil 35 ist dabei, wie durch die beiden dargestellten Pfeile verdeutlicht, verschieblich. In einer in Fig. 7 nach rechts versetzten Position befindet sich der Spannkeil 35 in einer geöffneten Lage (open), d.h. die beiden Stützdome 27a und 27b sind nicht gegen die Stützwand 32 verspannt. In einer in Fig. 7 nach links versetzten Position befindet sich, wie dargestellt der Spannkeil 35 in einer geschlossenen Lage (close), d.h. die beiden Stützdome 27a und 27b sind gegen die Stützwand 32 verspannt. In dieser verspannten Lage werden durch zwei Spannkeilflächen 37 und 38, die an den zu ihnen korrespondierend schrägen Rippenflächen 28a und 28b der Stützdome 27a und 27b anliegen die Tropfschale 8 nach hinten in die Nische 4 gedrückt, um die Abdeckung 9 gegen die Rückwand 13 zu ziehen.

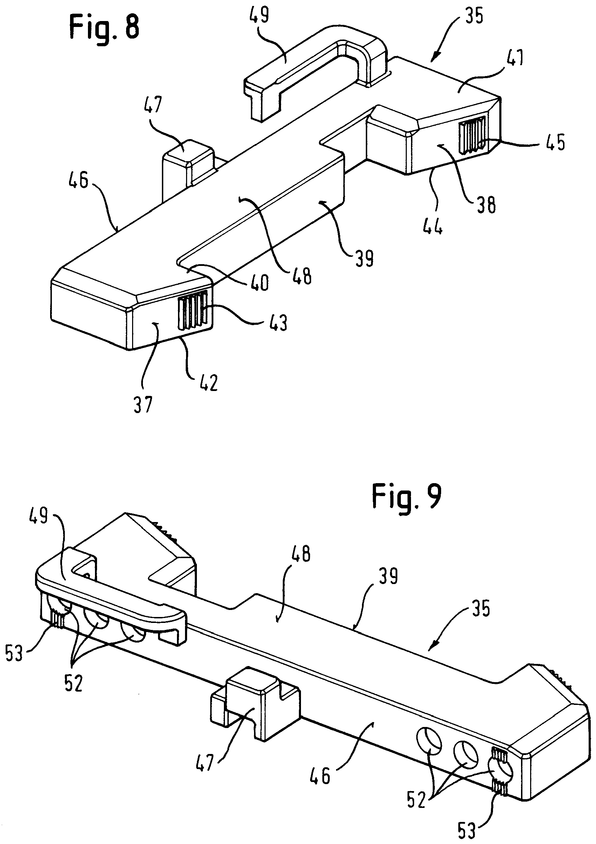

Der Spannkeil 35 ist in Fig. 8 und Fig. 9 in Alleinstellung gezeigt. Der Spannkeil 35 besteht im Wesentlichen aus einem etwa rechteckigen Grundkörper, an dessen einer schmalen Längsseite 39 zwei Vorsprünge 40 und 41 einen etwa C-förmigen Grundaufbau bilden. Das frei Ende des ersten Vorsprungs 40 weist eine erste Schräge 42 auf, welche die Spannkeilfläche 37 bildet. Die Spannkeilfläche 37 ist mit einer zur Rippenfläche 28a des Stützdomes 27a korrespondierenden ersten Rippenstruktur 43 versehen. Das frei Ende des zweiten Vorsprungs 41 weist eine zweite Schräge 44 auf, welche die Spannkeilfläche 38 bildet. Die Spannkeilfläche 38 ist mit einer zur Rippenfläche 28b des Stützdomes 27b korrespondierenden zweite Rippenstruktur 45 versehen. An einer der schmalen Längsseite 39 gegenüberliegenden Spannkeilseite 46 ist ein Griff 47 vorgesehen. Der Griff 47 kann einteilig an den Spannkeil 35 angeformt sein. Der Griff 47 ist ausgebildet, den Spannkeil 35 zwischen seiner Offenposition und seiner Schließposition hin und her bewegen zu können. Der Griff 47 ist im gezeigten Ausführungsbeispiel als würfelförmiger Vorsprung ausgebildet, der sich über eine Kopfseite 48 des Spannkeils 35 hinaus erhebt. An der Kopfseite 48 im Bereich des zweiten Vorsprungs 41 erhebt sich eine hakenförmige Sicherungsklammer 49. Die Sicherungsklammer 49 dient dazu den Spannkeil 35 zu fixieren, so dass ein unerwünschtes Lösen des Spannkeils 35 verhindert ist. Zur Fixierung des Spannkeils 35 in seiner Schließposition mittels lösbarer Befestigungsmittel, wie bspw. Schrauben, ist die Stützwand 32 aus einer Mehrzahl von Einzelzähnen 50 aufgebaut, welche Zwischenräume 51 zum Einführen der lösbaren Befestigungsmittel aufweist. Den Zwischenräumen 51 zugeordnet weist der Spannkeil mehrere Bohrungen 52 auf, in welche die lösbaren Befestigungsmittel eingeführt, im Falle von Schrauben eingedreht werden können, um den Spannkeil 35 zu fixieren. Mindestens eine der Bohrungen 52 ist mit einer weiteren Rippenstruktur 53 versehen.

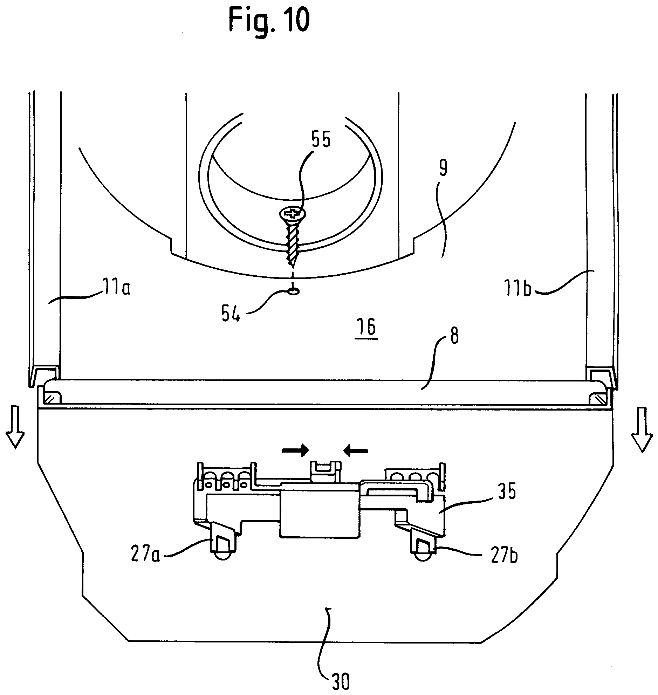

In Fig. 10 ist nochmals die Einbausituation nach Fig. 7 in verkleinertem Maßstab gezeigt. In der Fig. 10 ist die Ausgabeeinheit 1 mit Nische 4 und in die Halterung eingesetztem Spannkeil 35 dargestellt. Durch eine Schiebebewegung des Spannkeils 35 nach links werden die Stützdome 27a und 27b nach unten bewegt und dadurch die Tropfschale 8 nach hinten in die Nische 4 gedrückt, um die Abdeckung 9 gegen die Rückwand 13 zu ziehen. Dabei werden die Randabschnitte 11a, 11b der Abdeckung 9 gegen die frontseitigen Auflageflächen 12a, 12b des Nischenrahmens 5 gezogen. An einem oberen Ende der Abdeckung 9 in einem mittleren Bereich des schalenförmigen Abschnitts 10 ist eine Bohrung 54 in die Abdeckung 9 eingebracht, über welche Bohrung 54 die Abdeckung 9 mittels einer Schraube 55 mit seinem oberen Ende gegen die Rückwand 13 der Nische 4 gezogen werden kann.

## Patentansprüche

1. Kältegerät mit einer Ausgabeeinheit, aufweisend eine Nische (4) mit einer Rückwand (13), die mit einer Abdeckung (9) versehen ist, die einen nach innen in die Nische (4) gewölbten schalenförmigen Abschnitt (10) aufweist, der von gegenüberliegenden Randabschnitten (11a, 11b) begrenzt wird, die mit einem Nischenrahmen (5) verbunden sind, **dadurch gekennzeichnet, dass** die Randabschnitte (11a, 11b) der Abdeckung (9) unter Vorspannung an frontseitigen Auflageflächen (12a, 12b) des Nischenrahmens (5) anliegend in einer Montageendposition gehalten sind, indem der schalenförmige Abschnitt (10) durch wenigstens ein Befestigungsmittel gegen die Rückwand (13) der Nische (4) herangezogen ist.

2. Kältegerät nach Anspruch 1, **dadurch gekennzeichnet, dass** die Abdeckung (9) abnehmbar ausgebildet und mittels lösbarer Befestigungsmittel in der Montageendposition gehalten ist.

3. Kältegerät nach Anspruch 1 oder 2, **dadurch gekennzeichnet, dass** die Abdeckung (9) durch Befestigungsmittel in einem Abstand von der Rückwand (13) der Nische (4) gehalten ist, die in einem mittleren Bereich des schalenförmigen Abschnitts (10) der Abdeckung (9) angeordnet sind.

4. Kältegerät nach einem der Ansprüche 1 bis 3, **dadurch gekennzeichnet, dass** ein dem mittleren Bereich des schalenförmigen Abschnitts (10) der Abdeckung (9) zugeordneter Wandabschnitt der Rückwand (13) der Nische (4) tiefenverstellbar ausgebildet ist.

5. Kältegerät nach Anspruch 4, **dadurch gekennzeichnet, dass** die Rückwand (13) der Nische (4) zur Tiefenverstellung über verstellbare Justierkeile (17a, 17b) an einem Grundkörper (16) der Ausgabeeinheit (1) festgelegt ist.

6. Kältegerät nach einem der Ansprüche 2 bis 4, **dadurch gekennzeichnet, dass** das lösbare Befestigungsmittel eine Schraube (55) aufweist, die zum Heranziehen eines oberen Bereichs der Abdeckung (9) gegen die Rückwand der Nische, optisch verdeckt angeordnet ist.

7. Kältegerät nach einem der Ansprüche 2 bis 5, **dadurch gekennzeichnet, dass** das lösbare Befestigungsmittel ein Druckstück (22) aufweist, das ausgebildet ist, die Abdeckung (9) von seiner konkaven Seite aus in Richtung der Rückwand (13) der Nische (4) zu drücken, um einen unteren Bereich der Abdeckung (9) gegen die Rückwand (13) der Nische (4) heranzuziehen.

8. Kältegerät nach Anspruch 7, **dadurch gekennzeichnet, dass** zum Drücken des Druckstücks (22) gegen die Abdeckung (9) eine am Druckstück (22) anstehende Tropfschale (8) in der Ausgabeeinheit (1) tiefenverstellbar gelagert ist.

9. Kältegerät nach Anspruch 8, **dadurch gekennzeichnet, dass** die tiefenverstellbare Tropfschale (8) durch Betätigen eines verschiebbar gelagerten Spannkeils (35), zum Drücken des Druckstücks (22) gegen die Abdeckung (9), zu bewegen ist.

10. Kältegerät nach einem der Ansprüche 1 bis 9, **dadurch gekennzeichnet, dass** die Abdeckung (9) aus einem metallischen Bandmaterial, insbesondere aus einem Edelstahlblech hergestellt ist.

11. Verfahren zur Montage der Ausgabeeinheit (1) des Kältegerätes nach einem der Ansprüche 2 bis 10 an einer Tür (3) mit den folgenden Schritten:
- Einsetzen der schalenförmigen, insbesondere aus Edelstahlblech hergestellten Abdeckung (9) durch eine Öffnung in der Tür (3), bis der gewölbter Abschnitt (10) der Abdeckung (9) vor der Rückwand (13) der Nische (4) der Ausgabeeinheit (1) positioniert ist,
- Heranziehen eines oberen Bereichs der Abdeckung (9) gegen die Rückwand (13) der Nische (4) durch Anziehen des lösbaren Befestigungsmittels,
- Einsetzen einer Tropfschale (8) in die Ausgabeeinheit (1),
- Spannen eines Spannkeils (35) zur Tiefenverstellung der Tropfschale (8), um einen unteren Bereich der Abdeckung (9) mittels eines von der Tropfschale (8) betätigten Druckstücks (22) gegen die Rückwand (13) der Nische (4) zu drücken.

## Claims

1. Refrigeration device with an output unit, having a niche (4) with a rear wall (13) which is provided with a cover (9) having a dish-shaped section (10) that is curved inwardly into the niche (4) and bounded by opposite edge sections (11a, 11b) connected by means of a niche frame (5), **characterised in that** the edge sections (11a, 11b) of the cover (9) are held in a final mounting position applied under prestress against front supporting surfaces (12a, 12b) of the niche frame (5) by having the dish-shaped section (10) pulled against the rear wall (13) of the niche (4) by at least one securing means.

2. Refrigeration device according to claim 1, **characterised in that** the cover (9) is embodied as being detachable and is held in the final mounting position by securing means that can be released.

3. Refrigeration device according to claim 1 or 2, **characterised in that** the cover (9) is held at a distance from the rear wall (13) of the niche (4) by securing means located in a central region of the dish-shaped section (10) of the cover (9).

4. Refrigeration device according to one of claims 1 to 3, **characterised in that** a wall section, assigned to the central region of the dish-shaped section (10) of the cover (9), of the rear wall (13) of the niche (4) is embodied as being depth-adjustable.

5. Refrigeration device according to claim 4, **characterised in that**, for depth-adjusting, the rear wall (13) of the niche (4) is fixed to a basic body (16) of the output unit (1) via adjustable adjusting wedges (17a, 17b).

6. Refrigeration device according to one of claims 2 to 4, **characterised in that** the releasable securing means has a screw (55) that is located visually concealed for pulling a top region of the cover (9) against the rear wall of the niche.

7. Refrigeration device according to one of claims 2 to 5, **characterised in that** the releasable securing means has a pressure piece (22) embodied for pushing the cover (9) from its concave side toward the rear wall (13) of the niche (4) for pulling a bottom region of the cover (9) against the rear wall (13) of the niche (4).

8. Refrigeration device according to claim 7, **characterised in that** a drip pan (8) applied against the pressure piece (22) is depth-adjustably mounted in the output unit (1) for pushing the pressure piece (22) against the cover (9).

9. Refrigeration device according to claim 8, **characterised in that** the depth-adjustable drip pan (8) can be moved by actuating a movably mounted tensioning wedge (35) for pressing the pressure piece (22) against the cover (9).

10. Refrigeration device according to one of claims 1 to 9, **characterised in that** the cover (9) is made from a metallic strip material, in particular a high-grade steel sheet.

11. Method for installing an output unit (1) of the refrigeration device according to one of claims 2 to 10 on a door (3), having the following steps:
- Inserting a dish-shaped cover (9) made in particular of high-grade steel sheet through an opening in the door (3) until the curved section (10) of the cover (9) is positioned in front of a rear wall (13) of a niche (4) in the output unit (1),
- pulling a top region of the cover (9) against the rear wall (13) of the niche (4) by tightening a releasable securing means,
- inserting a drip pan (8) into the output unit (1),
- bracing a tensioning wedge (35) for adjusting the depth of the drip pan (8) to push a bottom region of the cover (9) against the rear wall (13) of the niche (4) by means of a pressure piece (22) actuated by the drip pan (8).

## Revendications

1. Appareil frigorifique comprenant une unité de distribution, présentant une niche (4) dotée d'une paroi arrière (13) munie d'un recouvrement (9) qui présente une section (10) en forme de coque bombée vers l'intérieur dans la niche (4), laquelle section est limitée par des sections de bord (11a, 11b) opposées qui sont reliées à un cadre de niche (5), **caractérisé en ce que** les sections de bord (11a, 11b) du recouvrement (9) sont maintenues dans une position finale de montage en étant adjacentes, sous précontrainte, à des surfaces d'appui (12a, 12b) côté frontal du cadre de niche (5) du fait que la section (10) en forme de coque est rapprochée contre la paroi arrière (13) de la niche (4) par au moins un moyen de fixation.

2. Appareil frigorifique selon la revendication 1, **caractérisé en ce que** le recouvrement (9) est réalisé de manière amovible et est maintenu dans la position finale de montage au moyen de moyens de fixation amovibles.

3. Appareil frigorifique selon la revendication 1 ou 2, **caractérisé en ce que** le recouvrement (9) est maintenu à écart de la paroi arrière (13) de la niche (4) par des moyens de fixation qui sont disposés dans une partie centrale de la section (10) en forme de coque du recouvrement (9).

4. Appareil frigorifique selon l'une quelconque des revendications 1 à 3, **caractérisé en ce qu'**une section de paroi de la paroi arrière (13) de la niche (4), associée à la partie centrale de la section (10) en forme de coque du recouvrement (9), est réalisée de manière réglable en profondeur.

5. Appareil frigorifique selon la revendication 4, **caractérisé en ce que** la paroi arrière (13) de la niche (4), pour le réglage en profondeur, est fixée sur un corps de base (16) de l'unité de distribution (1) par l'intermédiaire de coins d'ajustage (17a, 17b) réglables.

6. Appareil frigorifique selon l'une quelconque des revendications 2 à 4, **caractérisé en ce que** le moyen de fixation amovible présente une vis (55) qui, pour rapprocher une partie supérieure du recouvrement (9) contre la paroi arrière de la niche, est disposée de manière optiquement masquée.

7. Appareil frigorifique selon l'une quelconque des revendications 2 à 5, **caractérisé en ce que** le moyen de fixation amovible présente une pièce de pression (22) qui est réalisée pour presser le recouvrement (9) en direction de la paroi arrière (13) de la niche (4) depuis son côté concave afin de rapprocher une partie inférieure du recouvrement (9) contre la paroi arrière (13) de la niche (4).

8. Appareil frigorifique selon la revendication 7, **caractérisé en ce que** pour presser la pièce de pression (22) contre le recouvrement (9), une coupelle de récupération (8) placée contre la pièce de pression (22) est logée de manière réglable en profondeur dans l'unité de distribution (1).

9. Appareil frigorifique selon la revendication 8, **caractérisé en ce que** la coupelle de récupération (8) réglable en profondeur est à déplacer en actionnant un coin d'ajustage (35) logé de manière coulissante, destiné à appuyer la pièce de pression (22) contre le recouvrement (9).

10. Appareil frigorifique selon l'une quelconque des revendications 1 à 9, **caractérisé en ce que** le recouvrement (9) est fabriqué dans une matière métallique en bande, notamment dans une tôle d'acier inoxydable.

11. Procédé de montage de l'unité de distribution (1) de l'appareil frigorifique selon l'une quelconque des revendications 2 à 10 sur une porte (3), comprenant les étapes suivantes :
- insertion du recouvrement (9) en forme de coque, notamment fabriqué en tôle d'acier inoxydable, à travers une ouverture dans la porte (3), jusqu'à ce que la section (10) bombée du recouvrement (9) soit positionnée devant la paroi arrière (13) de la niche (4),
- rapprochement d'une partie supérieure du recouvrement (9) contre la paroi arrière (13) de la niche (4) par serrage du moyen de fixation amovible,
- pose d'une coupelle de récupération (8) dans l'unité de distribution (1),
- serrage d'un coin de serrage (35) pour le réglage en profondeur de la coupelle de récupération (8) afin d'appuyer une partie inférieure du recouvrement (9) contre la paroi arrière (13) de la niche (4) au moyen d'une pièce de pression (22) actionnée par la coupelle de récupération (8).
